# EUROPEAN PATENT SPECIFICATION

(11) **EP 0 452 262 B1**
(45) Date of publication and mention of the grant of the patent: **03.01.1996**
(21) Application number: 91810239.3
(22) Date of filing: 03.04.1991
(51) Int. Cl.: A23L 1/308

(54) **Reduced calorie pressed tablet with improved mouthfeel**
Kalorienarme gepresste Tabletten mit verbessertem Mundgefühl
Tablette compressée à teneur réduite en calorie donnant une meilleure sensation en bouche

(30) Priority: 09.04.1990 US 507279
(43) Date of publication of application: 16.10.1991
(73) Proprietor: PFIZER INC., New York, N.Y. 10017 (US)
(72) Inventor: Shaw, James J., Morristown, New Jersey 07960 (US); Bunick, Frank J., Randolph, New Jersey 07869 (US)
(74) Representative: Ruddock, Keith Stephen

(56) References cited:
- EP-A- 0 248 548
- EP-A- 0 398 465
- WO-A-89/00819
- US-A- 4 013 775
- R. VOIGT, M. BORNSCHEIN "Lehrbuch der pharmazeutischen Technologie" 3. Auflage, 1979, Verlag Chemie, Weinheim, New York, Seiten 172-174

## Description

The present invention relates to the art of providing low calorie compressed confections which are intended to reside in the oral cavity for a period of time while being consumed. In particular, the present invention provides confections containing reduced calorie bulking agents which have improved processibility, tablet texture and friability.

In recent years, the public has become increasingly attentive to reducing caloric intake. The beverage industry has met this demand by providing diet soft drinks which rely upon high intensity non-nutritive sweeteners to replace the sweetness otherwise provided by sugar. Solid food manufacturers have not been as successful in providing reduced-calorie alternatives. In addition to providing sweetness, sugar often provides bulk to the food stuff which must be replaced if the sugar is to be removed.

To this end, various low-calorie bulking agents have been developed over the years in an effort to provide organo leptically acceptable taste. One such example of a low-calorie bulking agent is polydextrose. Polydextrose is a polymer of glucose approved for use in certain food products and has only one quarter the caloric content of sucrose, (polydextrose: 1 cal per gram; sucrose: 4 cal per gram). Thus, in those foods where it is desired to reduce caloric value and/or sweetness, polydextrose provides a useful non-sweet bulking alternative to sugar. Polydextrose may be used alone or in combination with various artificial sweeteners and caloric intake can often be reduced by 50% or more.

Polydextrose is an essentially non-nutritive carbohydrate substitute which can be prepared through polymerization of glucose in the presence of food-acceptable polycarboxylic acid catalysts and polyols. See, for example, U.S. Patent No. 3,766,165 and U.S. Patent 3,876,794. Generally, polydextrose is known to be available in two forms, Polydextrose A, a powdered solid, and Polydextrose N, a 70% solution, both of which include small amounts of low molecular weight components such as glucose, sorbitol and their oligomers.

The ability to include polydextrose as a non-nutritive bulking agent in food stuffs has suffered from several short-comings. For example, the use of polydextrose is hampered by its unacceptable bitterness and "musty" off-flavor. One solution to this organoleptic shortcoming is found in EP-A 0 455 600 wherein hard candy confections containing pH-adjusted polydextrose solution display significant reductions in bitterness and musty off-flavor.

In the past, confectionery compressed tablets containing polydextrose have also been fraught with several technical and processing difficulties. For example, poly- dextrose is poorly compressible. Polydextrose in powder form flows poorly. As a result, the compression die cavities of tableting machines are often improperly filled. This non-uniform filling results in significant fluctuation in the weight and hardness of the confections. Tablets which rely on polydextrose as a bulking agent are extremely prone to capping (the tendency of compressed tablets to separate into layers). The tablets also tended to be soft and crumbly, both in the package for sale and while in the mouth of the consumer. In addition, prior art confections containing polydextrose tended to dissolve unevenly in the oral cavity and were often deformed by the teeth of the consumer.

Some attempts at solving the above-described problems have been directed to agglomeration techniques. Agglomeration suggests a gathering together of particles into larger size units. The advantages of increasing the size of powders lie in improving handling properties of the bulk materials, improving control over solubility, and the flow of the dry material.

The agglomeration process typically involves molecular bonding as well as a binding liquid. Numerous types of agglomeration are known. Common examples include compaction, extrusion, agitation, fusion, and fluidized-bed agglomeration.

Tableting is an example of compaction where loose materials such as powders are compressed between opposing surfaces such as in a die and cavity arrangement.

Pellet mills are an example of extrusion. The material sought to be agglomerated is forced through cylindrical containers having small openings, and a knife cuts the extruded pellets to a length as they are forced through the die.

The rolling drum is the simplest form of agglomeration using agitation. Aggregates are formed by using what is commonly referred to as the "snowball effect". Bulk particles in the presence of a liquid binder or wetting agent are rolled into a spherical shape. The spheres become larger as the drum continues to roll. The particles are removed from the rolling drum and screened to obtain particles having a predetermined size.

Fusion processes for agglomeration are mainly used for ores and minerals and rely upon heated air which is passed through a loose bed of finely ground material. The particles partially fuse together without the assistance of a binder.

Fluidized-bed agglomeration utilizes several principles. Aggregates are formed by the collision and coherence of fine particles and a liquid binder in a turbulent stream. Typically, a tank-shaped mixing vessel contains mounted spray nozzles for introduction of a binder. A suction fan typically draws air through the bottom of the vessel and creates an updraft within the mixing vessel. The materials spiral downward through a mixing chamber where they are met by the updraft and are held in suspension near the portion of the vessel where the spray nozzles are located. The liquid binder is injected in a fine mist and individual droplets gather the solid fine particles until the resulting agglomerate overcomes the force of the updraft and falls to the bottom of the vessel as a finished granule.

Polydextrose, however, is difficult to agglomerate. Agglomerated particles or granules are difficult to form in conventional planetary mixers because polydextrose is apt to clump as a binding solution is added. Further, polydextrose wets rapidly forming a viscous, tacky layer which hinders moisture transfer into the core of dry powder lump. The clumps are also difficult to dry. These problems severely hamper the flow properties and compressibility of confectionery tablets containing polydextrose. In addition, these poor granulation and agglomeration properties have also limited the consumer appeal of polydextrose-containing confections. Confections containing polydextrose granules often dissolve unevenly and crumble in the oral cavity.

It is, therefore, an object of the present invention to provide an improved method of incorporating polydextrose in food products by agglomerating polydextrose powder into particles which have dramatically improved processibility characteristics.

In a further embodiment, the present invention provides low-calorie confections containing polydextrose which dissolve evenly in the oral cavity.

The present invention provides a method of preparing a reduced-calorie confection comprising the steps of:
a) intimately mixing polydextrose powder as a non-nutritive bulking agent with at least a second non-polydextrose bulking agent to form a homogeneous mixture,
b) intimately contacting said mixed polydextrose powder with a binding solution for a time sufficient to effect congealing of said powder into granules and
c) forming compressed tablets from said granules. Inter alia the method includes intimately contacting polydextrose powder with a binding solution for a time sufficient to effect agglomeration of the polydextrose powder into particles of from 16 to 100 mesh. The polydextrose granules are thereafter compressed into confectionery tablets of uniform weight and hardness, and less subject to capping and chipping.

In the above embodiment, polydextrose is homogeneously mixed with another solid bulking agent such as sucrose and/or sugar alcohols such as sorbitol. The homogenous mixture of polydextrose and bulking agent are thereafter sprayed with a binding solution such as sodium alginate, preferably as a 2% solution. The agglomerated granules containing polydextrose are typically from about 16 to about 100 mesh. In a preferred embodiment, the granules are between about 20 to about 70 mesh while in a most preferred embodiment, from about 30 to about 60.

In the instance where polydextrose powder is combined with a solid bulking agent, the amount of polydextrose powder can vary from about 13% to about 98% of the agglomeration granule content while the non-polydextrose bulking agent is present in an amount of from about 87% to about 2%. Preferably, the polydextrose is present in an amount of from about 35% to about 89%, while most preferably, polydextrose is present in an amount of from about 44 to about 67%.

While the granulated polydextrose prepared in accordance with the present invention can be used in any edible food product which is suitable for its inclusion, it has been found to be especially effective in the art of confectionery compressed tablets. The processing properties of the polydextrose granules allow for tablets to be less prone to capping and chipping, be of more uniform weight and hardness and resist crumbling when consumed. In addition, the tableting granulation is significantly improved and flows in a fluid-like fashion. For a better understanding of the present invention, together with other and further objects, reference is made to the following description although the invention is further defined in the appended claims.

In accordance with the present invention, a reduced calorie confectionery compressed tablet is provided with polydextrose granules. The preparation of the polydextrose granules is achieved by agglomeration of polydextrose powder with a binding solution to form particles of from about 20 to about 70 mesh.

In a preferred embodiment, the agglomeration method includes intimately mixing polydextrose powder with at least a second solid bulking agent to form a homogenous mixture. Examples of suitable solid bulking agents include sucrose, sugar alcohols such as sorbitol and mannitol, sugar alcohol oligomers, insomalts such as Palatinit, dextrose and its oligomers and the like. When so combined, the polydextrose is present in an amount of from about 13% to about 98% by weight, preferably from about 35% to about 89%, and most preferably from about 44% to about 67%. The second solid bulking agent is present in amounts up to about 85%, preferably from about 11% to about 65 % and most preferably of from about 35% to about 56%. The finished compressed confectionery tablet will also include minor amounts of binders, lubricants, flavors, and other technical aids which are known to those skilled in the art to be necessary for compressed confections.

The binding solution used for agglomerating the polydextrose granules may be selected from sorbitol solution, alginate solutions such as sodium alginate, potassium alginate and mixtures thereof. Sorbitol may be present as a solution of from about a 50 to about 80% by weight. Alginate solutions may range from about 0.5% to about 2.5%. Preferably, however, about a 70% solution of sorbitol or approximately a 2% solution of sodium alginate are used. Alternative binding solutions may include methylcellulose, carboxymethylcellulose, hydroxypropylmethylcellulose and gum acacia.

The apparatus useful in accordance with the method of the present invention may include a fluidized-bed granulator, such as a Uniglatt machine available from Glatt Air Techniques. Other fluidized-bed agglomeration apparatus are known in the confectionery manufacturing arts, and selection of these specific apparatus will be apparent to the artisan.

For illustrative purposes, the following agglomeration technique may be used. About 45 parts of polydextrose is homogeneously mixed with 30 parts of a second solid bulking agent, such as sorbitol or sucrose. The mixture is there- after sprayed with about 25 parts of a 70% sorbitol solution. The spray rate may range from about 5 ml per minute to intermittent rates of up to 20 ml per minute. The fluidized-bed agglomeration is carried out at a spray pressure of approximately 2.5 bar and inlet air temperatures of about 50° C. The air flow of the fluidized-bed agglomer- ation apparatus may be adjusted during the agglomeration process. For example, it may be set higher during the drying phase of the granule agglomeration than during the granule formation phase. The granules are allowed to dry before any tablet compression is undertaken. For example, it has been found that the polydextrose agglomerations are sufficiently dry after five minutes. The above described process produces granules of about 16 to about 100 mesh. The size of the polydextrose-containing granules, however, can be varied by changing the binder solution application rate, spray droplet size and/or inlet air temperature.

After the polydextrose granulation has been formed, the granules may be combined with various additional flavorings, sweeteners, colorants, and so forth to form a compressed confection. The preparation of compressed confectionery products is historically well known and has changed little through the years. Typically, a thoroughly mixed granulation containing all of the various ingredients is compressed in a tableting machine between two opposing surfaces or compacted in a die.

In the instance where flavoring components are included, the flavoring components may be chosen from natural and synthetic flavorings. These flavorings may be liquid or in a solid form such as prepared by spray drying, plating, encapsulation and the like. A non-limiting representative example of such flavors include synthetic flavoring liquids such as synthetic flavor oils and flavoring aromatics and/or oils; and/or liquids, oleoresin or extracts derived from plants, leaves, flowers, fruits, etc., and combinations thereof. Preferably, the flavor component is selected from spearmint oil, cinnamon oil, oil of wintergreen (methyl salicylate) and peppermint oil, clove oil, bay oil, anise oil, eucalyptus oil, thyme oil, cedar leaf oil, oil of nutmeg, allspices, oil of sage, mace, oil of bitter almonds, and cassia oil. Also useful are artificial, natural or synthetic fruit flavors such as vanilla, and citrus oils including lemon, orange, grape, lime and grapefruit and fruit essences including apple, pear, peach, grape, strawberry, raspberry, cherry, plum, pineapple, apricot and so forth.

The confection may also include a colorant. The colorants may be selected from any of the numerous dyes suitable for food, drug and cosmetic applications, and known as FD&C dyes and the like. The materials acceptable for the foregoing spectrum of use may be water-soluble or water-insoluble aluminum lakes. Titanium dioxide, a water insoluble pigment may also be used to improve the tablet appearance. A full recitation of all FD&C and D&C dyes and their corresponding chemical structures may be found in the Kirk-Othmer Encyclopedia of Chemical Technology, in Volume 5, pages 857-884, which is incorporated herein by reference.

In the instance where sweeteners are utilized, the present invention contemplates the inclusion of those sweeteners well known in the art, including both natural and artificial sweeteners. The sweeteners may be chosen from the following non-limiting list: sugars such as sucrose, glucose, (corn syrup), dextrose, invert sugar, fructose, sugar alcohols such as sorbitol, sorbitol syrup, mannitol, xylitol and the like, and mixtures thereof. Also contemplated as an additional sweetener is the non-fermentable sugar substitute (hydrogenated starch hydrolysate) which is described in U.S. Reissue Patent No. 26,959. Additionally, intense sweeteners such as saccharin and its various salts such as the sodium or calcium salt; cyclamic acid and its various salts such as the sodium or calcium salt; the dipeptide sweeteners such as aspartame, dihydrochalcone compounds, glycyrrhizin, Stevia Rebaudiana (Stevioside); chloro derivatives of sucrose, dihydrofalvinol; hydroxyguaiacol esters; L-amino dicarboxylic acid gem-diamines; L-aminodicarboxylic acid aminoalkenoic acid ester amides are contemplated. Also contemplated is the synthetic sweetener 3,6-dihydro-6-methyl-1-1,2,3-oxathiazin-4-one-2,2-dioxide, particularly the potassium (acesulfame-K), sodium and calcium salts thereof as described in German Patent No. 2,001,017.7. In general, the amount of sweetener will vary with the desired amount of sweetness desired for the particular confection.

The variations that one may practice with regard to the above-mentioned confections are wide ranging and within the ability of those skilled in the art particularly with regard to the use of additional composition fillers, flavoring adjuncts, the use of coloring agents, etc.

Tests were conducted using confections prepared in accordance with the present invention and comparing them with similarly prepared confections not containing fluidized-bed agglomerated polydextrose. It was found that the technical and processing difficulties which often detracts from the overall acceptance of products made with polydextrose have been largely removed.

The following Examples serve to provide further appreciation of the invention but are not meant in any way to restrict the effective scope of the invention.

### EXAMPLE I

Polydextrose agglomerations were prepared using the following formulae:

### POLYDEXTROSE AGGLOMERATION

| EXAMPLE: | I | II | III | IV |
|---|---|---|---|---|
| Ingredients | | | | |
| Pfizer Improved Polydextrose | 750.0g | 337.5g | 337.5g | - |
| W-L Purified Polydextrose | - | - | - | 310.0g |
| Powdered Sorbitol | - | 287.5g | - | 285.0g |
| Sucrose | - | - | 384.0g | - |
| Corn Syrup 42 DE | - | - | 28.5g | - |
| Breath Freshener | 15.5g | 15.5g | 15.5g | 15.5g |
| Coloring Agent (TiO₂) | 5.6g | 5.6g | 5.6g | 5.6g |

| Binders | | | | |
|---|---|---|---|---|
| Algin 2% solution | 3.2g | - | 3.2g | 2.0g |
| Sorbitol 70% solution | - | 25.0g | - | 93.0g |

In each of the above Examples, the polydextrose agglomeration was carried out using a fluidized-bed granulator. The binders were applied as a spray at a rate of about 5 ml/min. although intermittently, the spray rate was increased to about 20 ml/min. The agglomeration was carried out with an atomization pressure of about 2.5 bar and at an air inlet temperature of about 50° C. Air flow was approximately 40 CFM (Flat Setting 30) and higher, approximately 70 CFM (Flap Setting 50 or greater), during the drying phase. The drying time for the granules was approximately 5 to 15 minutes after final binder application.

In Example I, polydextrose alone was subjected to agglomeration using algin as a binder. In Examples II and IV, polydextrose was combined with powdered sorbitol and sprayed with a sorbitol binder, while in Example III, polydextrose was combined with sucrose and corn syrup before agglomerating with algin solution.

In each of the above samples, 15.5 grams of the breath freshener copper gluconate and 5.6 grams of the coloring agent titanium dioxide were included in the agglomeration.

According to the method of the present invention, the fluidized-bed granulator provided polydextrose-containing granules of a mesh size of from about 16 to about 100. The size of the granules however is variable and can be adjusted by changing the binder application rate and air temperature. Preferably, the granules are from about 20 to about 70 mesh while most preferably the granules are from about 30 to about 60 mesh.

Upon completion of the polydextrose agglomeration and formation of granules, the granules were then incorporated into confectionery compressed tablets for comparative testing and sensory evaluation. Each of the samples were prepared using the following formulations of the present invention:

### INVENTION SAMPLES

| EXAMPLE: | I | II | III | IV |
|---|---|---|---|---|
| Ingredients | | | | |
| Polydextrose Agglom. | 300.00g | 300.00g | 300.00g | 300.00g |
| Magnesium Stearate | 2.25g | 2.25g | 2.25g | 1.50g |
| Aspartame | 1.25g | 1.25g | 1.25g | 0.75g |
| Spray Dried Flavor | 2.25g | 2.25g | 2.25g | 1.50g |

The above compositions were then subjected to testing for evaluation, the results of which are set forth in Table III below.

**TABLE III**

| SPECIMEN: | CONTROL | I | II | III | IV |
|---|---|---|---|---|---|
| Sensory Evaluation | Very soft; crumbled | Soft to acceptable | Excellent at touch | Excellent | Good |
| Tablet Hardness (SCV) | <5 | 9.5 | 65.6 | 55.2 | 27.4 |
| Capping | Severe | Acceptable | Negligible | Negligible | Slight |
| Variability Tablet Weight | Large | Acceptable | Slight | Negligible | Negligible |
| Granulation Flow | Poor | Good | Good | Good | Good |
| Tablet Appearance | Mottled | Slightly Mottling | Good | Good | Good |

Referring now to Table III, it can be seen that the confection products of the present invention provided favorable results when compared to the prior art control. In each of the inventive samples, the confections were reported as dissolving more evenly in the oral cavity as well as imparting a smoother mouthfeel. The Control, on the other hand, was very soft and crumbled to the touch. Tablet hardness, as expressed in Strong-Cobb Units, was markedly superior for each of the inventive samples. Capping of the inventive confections containing the agglomerated poly- dextrose was significantly reduced. Friability, the tendency of a tablet to crumble, was also significantly reduced. The inventive tablets did not crumble when consumed and resisted deformation by the teeth when in the oral cavity.

In addition, the variability of tablet weight was significantly reduced and well within commercial manufacturing tolerances.

Tablet granulation flow through the hoppers and into the compression dies was markedly improved. The Control sample granulation tended to clump and resist flowing while the invention samples, on the other hand, flowed smoothly throughout the tableting process.

Visual inspection of the tablets made in accordance with the present invention showed that due to the novel agglomeration process, the confectionery tablets have a more uniform, less mottled, smoother and commercially acceptable appearance.

Whereas in the past, confections containing polydextrose were difficult to prepare because of the technical difficulties in tableting such as capping, poor compressibility, the tendency to be soft and crumbly, those confections made in accordance with the present invention suffered from none of the above liabilities. By forming agglomeration granules, either alone or as a mixture of polydextrose and a bulking agent such as sorbitol or sucrose, superior low calorie confections are possible.

## Claims

1. A method of preparing reduced-calorie confectionery compressed tablets comprising the steps of:
a) intimately mixing polydextrose powder as a non-nutritive bulking agent with at least a second non-polydextrose bulking agent to form a homogeneous mixture,
b) intimately contacting said mixed polydextrose powder with a binding solution for a time sufficient to effect congealing of said powder into granules and
c) forming compressed tablets from said granules.

2. The method of claim 1, wherein said binding solution is selected from sorbitol solutions, alginate solutions, and mixtures thereof.

3. The method of claims 1 to 2 wherein said sorbitol is present in an amount of from 50% to 80% by weight.

4. The method of claims 1 to 3 wherein said sorbitol is present as a 70% solution.

5. The method of claim 2 wherein said alginate is selected from sodium or potassium salts.

6. The method of claim 5 wherein said sodium alginate is present as a 0.5% to 2.5%, preferably 2% solution.

7. The method of claim 1 to 6 wherein said granules have a particle size of from 16 to 1oo mesh.

8. The method of claim 7 wherein said granules have a particle size of from 20 to 70 mesh.

9. The method of claim 7 wherein said granules have a particle size of from 30 to 60 mesh.

10. The method of claims 1 to 9 wherein said bulking agent is selected from dextrose, sucrose, sugar alcohols, sugar alcohol oligomers, Palatinit, dextrose, dextrose oligomers and mixtures thereof.

11. The method of claim 1 wherein step b.) is carried out in a fluidized bed agglomeration system to form granules.

12. A reduced calorie confection composition prepared according to the method of claims 1 to 11.

## Patentansprüche

1. Verfahren zur Herstellung von weniger Kalorien aufweisenden Konfektpreßtabletten, das die folgenden Schritte umfaßt:
a) Inniges Vermischen eines Polydextrosepulvers als ein Masse lieferndes Mittel ohne Nährwirkung mit mindestens einem zweiten von Polydextrose verschiedenen, Masse liefernden Mittel unter Bildung eines homogenen Gemisches,
b) inniges Inberührungbringen des Polydextrosepulvergemisches während einer zum Erstarren des Pulvers zu Granulat ausreichenden Zeit mit einer Bindemittellösung und
c) Ausbilden von Preßtabletten aus dem Granulat.

2. Verfahren nach Anspruch 1, wobei die Bindemittellösung unter Sorbitlösungen, Alginatlösungen und Gemischen hiervon ausgewählt ist.

3. Verfahren nach Anspruch 1 oder 2, wobei das Sorbit in einer Menge von 50 bis 80 Gew.-% vorhanden ist.

4. Verfahren nach einem der Ansprüche 1 bis 3, wobei das Sorbit in Form einer 70%igen Lösung vorliegt.

5. Verfahren nach Anspruch 2, wobei das Alginat unter Natrium- oder Kaliumsalzen ausgewählt ist.

6. Verfahren nach Anspruch 5, wobei das Natriumalginat in Form einer 0,5 bis 2,5, vorzugsweise 2%igen Lösung vorliegt.

7. Verfahren nach einem der Ansprüche 1 bis 6, wobei das Granulat eine Teilchengröße von 16 bis 100 mesh aufweist.

8. Verfahren nach Anspruch 7, wobei das Granulat eine Teilchengröße von 20 bis 70 mesh aufweist.

9. Verfahren nach Anspruch 7, wobei das Granulat eine Teilchengröße von 30 bis 60 mesh aufweist.

10. Verfahren nach einem der Ansprüche 1 bis 9, wobei das Masse liefernde Mittel unter Dextrose, Saccharose, Zuckeralkoholen, Zuckeralkohololigomeren, Palatinit, Dextrose, Dextroseoligomeren und Gemischen hiervon ausgewählt ist.

11. Verfahren nach Anspruch 1, wobei die Stufe b) in einem Wirbelbettagglomerationssystem unter Bildung eines Granulats durchgeführt wird.

12. Kalorienarme Konfektzusammensetzung, hergestellt nach dem Verfahren gemäß einem der Ansprüche 1 bis 11.

## Revendications

1. Procédé de préparation de comprimés de confiserie à teneur réduite en calories qui comprend les étapes suivantes :
a) le mélange intime de poudre de polydextrose comme agent non nutritif donnant du volume avec au moins un second agent donnant du volume autre que le polydextrose pour former un mélange homogène,
b) la mise en contact intime de ladite poudre mélangée de polydextrose avec une solution liante pendant un temps suffisant pour réaliser la prise en granules de ladite poudre et,
c) la formation de comprimés à partir desdits granules.

2. Procédé selon la revendication 1, dans lequel ladite solution de liaison est choisie parmi les solutions de sorbitol, les solutions d'alginate et leurs mélanges.

3. Procédé selon la revendication 1 ou 2, dans lequel ledit sorbitol est présent à raison de 50% à 80% en poids.

4. Procédé selon les revendications 1 à 3, dans lequel ledit sorbitol est présent sous la forme d'une solution à 70%.

5. Procédé selon la revendication 2, dans lequel ledit alginate est choisi parmi les sels de sodium ou de potassium.

6. Procédé selon la revendication 5, dans lequel ledit alginate de sodium est présent sous la forme d'une solution à 0,5-2,5%, et de préférence à 2%.

7. Procédé selon les revendications 1 à 6, dans lequel lesdits granules ont une taille de particules allant de maille 16 à maille 100 (1,19 µm à 150 µm).

8. Procédé selon la revendication 7, dans lequel lesdits granules ont une taille de particules allant de maille 20 à maille 70 (850 µm à 210 µm).

9. Procédé selon la revendication 7, caractérisé en ce que lesdits granules ont une taille de particules allant de maille 30 à maille 60 (550 µm à 250 µm).

10. Procédé selon les revendications 1 à 9, dans lequel ledit agent donnant du volume est choisi parmi le dextrose, le sucrose, les alcools de sucres, les oligomères d'alcools de sucres, le Palatinit, le dextrose, les oligomères du dextrose et leurs mélanges.

11. Procédé selon la revendication 1, dans lequel l'étape b) est mise en oeuvre dans un système d'agglomération à lit fluidisé pour former les granules.

12. Composition de confiserie à teneur réduite en calories préparée selon le procédé des revendications 1 à 11.
